Europäisches Patentamt

European Patent Office

Office européen des brevets

(19)

(11) Veröffentlichungsnummer: **0 401 569**
**A1**

## (12) EUROPÄISCHE PATENTANMELDUNG

(21) Anmeldenummer: **90109314.6**

(22) Anmeldetag: **17.05.90**

(51) Int. Cl.⁵: **B23K 33/00**

(30) Priorität: **03.06.89 DE 3918173**

(43) Veröffentlichungstag der Anmeldung:
**12.12.90 Patentblatt 90/50**

(84) Benannte Vertragsstaaten:
**DE ES IT NL**

(71) Anmelder: **Balcke-Dürr AG**
**Homberger Strasse 2 Postfach 1240**
**D-4030 Ratingen 1(DE)**

(72) Erfinder: **Beier, Albert**
**Neanderstrasse 7**
**D-4030 Ratingen(DE)**
Erfinder: **Denner, Peter**
**Beerenkothen 26**
**D-4030 Ratingen 1(DE)**
Erfinder: **Herrmann, Wolfgang**
**Dechenstrasse 4**
**D-4030 Ratingen 1(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Verfahren zum Aufschweissen von Rohrabzweigen auf eine mit Bohrungen versehene Behälterwand.**

(57) Die Erfindung betrifft ein Verfahren zum Aufschweißen von Rohrabzweigen (3) mittels eines ausschließlich von außen durchgeführten Lichtbogen-Schweißverfahrens auf eine mit Bohrungen (2) versehene Behälterwand (1). Der Rohrabzweig (3) ist am anzuschweißenden Ende vom Außendurchmesser ausgehend konisch nach innen verjüngt und mit einer ringförmigen Aufstandsfläche (5) versehen, die am Ende einer zylindrischen Verlängerung (6) ausgebildet ist. Mit dieser Aufstandsfläche (5) steht der Rohrabzweig (3) auf einer Gegenfläche (9) auf, die an der Behälterwand (1) konzentrisch zur Bohrung (2) ausgebildet ist. Um eine konstruktionsunabhängige Schweißnahtvorbereitung zu ermöglichen und die Verschweißung mit Hilfe der verschiedenen bekannten Lichtbogen-Schweißverfahren entweder restspaltfrei oder unter Einhaltung eines vorgegebenen Restspaltes durchführen zu können, wird die Breite der ringförmigen Aufstandsfläche (5) kleiner als der zulässige Restspalt (12) gewählt. Die Breite der Gegenfläche (9) wird geringfügig größer ausgebildet. Diese Gegenfläche (9) wird an dem der Bohrung (2) abgewandten Umfang durch einen einstückig aus dem Material der Behälterwand (1) ausgearbeiteten Ring (10) begrenzt, dessen Höhe geringfügig kleiner als die axiale Länge der am Rohrabzweig (3) ausgebildeten Verlängerung (6) ist und dessen Dicke derart gering ist, daß der Ring (10) vom von außen angesetzten Lichtbogen des jeweils angewandten Schweißverfahrens mit Sicherheit vollständig aufgeschmolzen wird.

Fig.1

# Verfahren zum Aufschweißen von Rohrabzweigen auf eine mit Bohrungen versehene Behälterwand

Die Erfindung betrifft ein Verfahren zum Aufschweißen von Rohrabzweigen mittels eines ausschließlich von außen durchgeführten Lichtbogen-Schweißverfahrens auf eine mit Bohrungen versehene Behälterwand, wobei der Rohrabzweig am anzuschweißenden Ende ausgehend vom Außendurchmesser konisch nach innen verjüngt ist und ausgehend vom zylindrischen Innendurchmesser mit einer ringförmigen Aufstandsfläche versehen ist, die rechtwinklig zur Mittelachse des Rohrabzweigs am Ende einer zylindrischen Verlängerung ausgebildet ist, deren Innendurchmesser dem Innendurchmesser des Rohrabzweigs entspricht, und mit der der Rohrabzweig auf einer entsprechenden Gegenfläche aufsteht, die an der Behälterwand die Bohrung umgebend als Ringfläche ausgebildet ist, deren Innendurchmesser dem Durchmesser der Bohrung entspricht.

Ein derartiges Verfahren zum Aufschweißen von Rohrabzweigen auf eine mit Bohrungen versehene Behälterwand ist aus der DE-PS 37 15 521 bekannt. Dieses Verfahren hat sich in der Praxis bewährt, hat allerdings den Nachteil, daß es nur unter Einsatz des Metall-Aktivgasschweißens (MAG) und unter Verwendung keramischer Stützringe durchgeführt werden kann. Derartige keramische Stützringe müssen speziell für die jeweilige Konstruktion angefertigt werden und verursachen demzufolge nicht nur zusätzliche Herstellkosten, sondern auch zusätzliche Aufwendungen für die Montage der keramischen Stützringe vor der Schweißung sowie für die Entfernung der Stützringe nach durchgeführtem Schweißvorgang.

Der Erfindung liegt die Aufgabe zugrunde, ein Verfahren zum Aufschweißen von Rohrabzweigen auf eine mit Bohrungen versehene Behälterwand der eingangs beschriebenen, als bekannt vorausgesetzten Art zu schaffen, das eine konstruktionsunabhängige Schweißnahtvorbereitung ermöglicht und für die verschiedenen Lichtbogen-Schweißverfahren geeignet ist, und zwar sowohl unter Einhaltung eines zulässigen Restspaltes als auch bei restspaltfreier Durchschweißung.

Die Lösung dieser Aufgabenstellung durch die Erfindung ist dadurch gekennzeichnet, daß die Breite der ringförmigen Aufstandsfläche des Rohrabzweiges kleiner als der zulässige Restspalt gewählt wird, daß die Breite der an der Behälterwand ausgebildeten Gegenfläche geringfügig größer ausgebildet wird als die Breite der ringförmigen Aufstandsfläche und daß diese Gegenfläche an dem der Bohrung abgewandten Umfang durch einen einstückig aus dem Material der Behälterwand ausgearbeiteten Ring begrenzt wird, dessen Höhe geringfügig kleiner als die axiale Länge der am Rohrabzweig ausgebildeten Verlängerung ist und dessen Dicke derart gering ist, daß der Ring vom von außen angesetzten Lichtbogen des jeweils angewandten Schweißverfahrens mit Sicherheit vollständig aufgeschmolzen wird.

Die erfindungsgemäßen Abmessungsverhältnisse der Ringflächen und die Ausbildung des erfindungsgemäßen Ringes als äußere Begrenzung der an der Behälterwand ausgebildeten Gegenfläche bewirken bei der Erzeugung des Lichtbogens zwangsläufig eine Einbeziehung des Ringes in das Schweißbad und damit in Verbindung mit der geringen Wandstärke des Ringes eine vollständige Aufschmelzung des Ringes. Bei zulässigem Restspalt kann somit dessen radiale Erstreckung nicht über das zulässige Maß hinausgehen; bei restspaltfreier Durchschweißung steht der Ring der dementsprechend einzubringenden Energie nicht störend entgegen.

Mit dem erfindungsgemäßen Verfahren wird der Vorteil erreicht, daß unabhängig von dem jeweils angewendeten Lichtbogen-Schweißverfahren eine einheitliche Schweißnahtvorbereitung sowohl an der mit Bohrungen versehenen Behälterwand als auch an den Rohrabzweigen erforderlich ist und daß auf die Verwendung zusätzlicher keramischer Stützringe verzichtet werden kann. Beim Elektrodenschweißen von Hand bleibt der zulässige Restspalt zwangsläufig unter dem zulässigen Wert, weil bereits die Breite der ringförmigen Aufstandsfläche des Rohrabzweiges kleiner als dieser zulässige Restspalt ausgeführt worden ist. Auch wenn für das erfindungsgemäße Verfahren eine Schutzgasschweißung, beispielsweise WIG oder MAG angewendet wird, liegt der verbleibende Restspalt zuverlässig unterhalb des zulässigen Wertes. Wird bei der Verwendung derartiger Schutzgasschweißverfahren mehr Energie eingebracht, kann eine restspaltfreie Durchschweißung erzielt werden, weil der mit geringer Höhe und geringer Wandstärke ausgebildete Ring vollständig aufgeschmolzen wird und damit einer Durchschweißung nicht im Wege steht. In an sich bekannter Weise dient auch beim erfindungsgemäßen Verfahren der an der Behälterwand ausgebildete Ring im Zusammenwirken mit den Ringflächen am Abzweig und an der Behälterwand zur Zentrierung des jeweiligen Rohrabzweiges. Schließlich wird der Vorteil erreicht, daß wegen der identischen Nahtvorbereitung unabhängig von der jeweiligen Konstruktion eine Lagerhaltung vorbereiteter Rohrabzweige problemlos möglich ist.

Bei einer bevorzugten Ausführungsform der Erfindung beträgt die Breite der ringförmigen Aufstandsfläche etwa 1,3 mm, die Breite der Gegenfläche etwa 1,5 mm und die Wanddicke des Ringes maximal 0,5 mm.

In der Zeichnung sind ein Rohrabzweig sowie ein mit einer Bohrung versehener Teil einer Behälterwand zur Erläuterung des erfindungsgemäßen Verfahrens dargestellt, und zwar zeigt:

Fig. 1 einen Schnitt durch das anzuschweißende Ende des Rohrabzweiges und den zugehörigen Teil der Behälterwand vor dem Ansetzen des Rohrabzweiges,

Fig. 2 eine der Fig.1 entsprechende Schnittdarstellung nach dem Ansetzen des Rohrabzweiges an die vorbereitete Behälterwand,

Fig. 3 einen der Fig.2 entsprechenden Schnitt nach Beendigung des Schweißverfahrens unter Einhaltung des zulässigen Restspaltes und

Fig. 4 eine der Fig.3 entsprechende Darstellung nach Durchführen einer restspaltfreien Verschweißung.

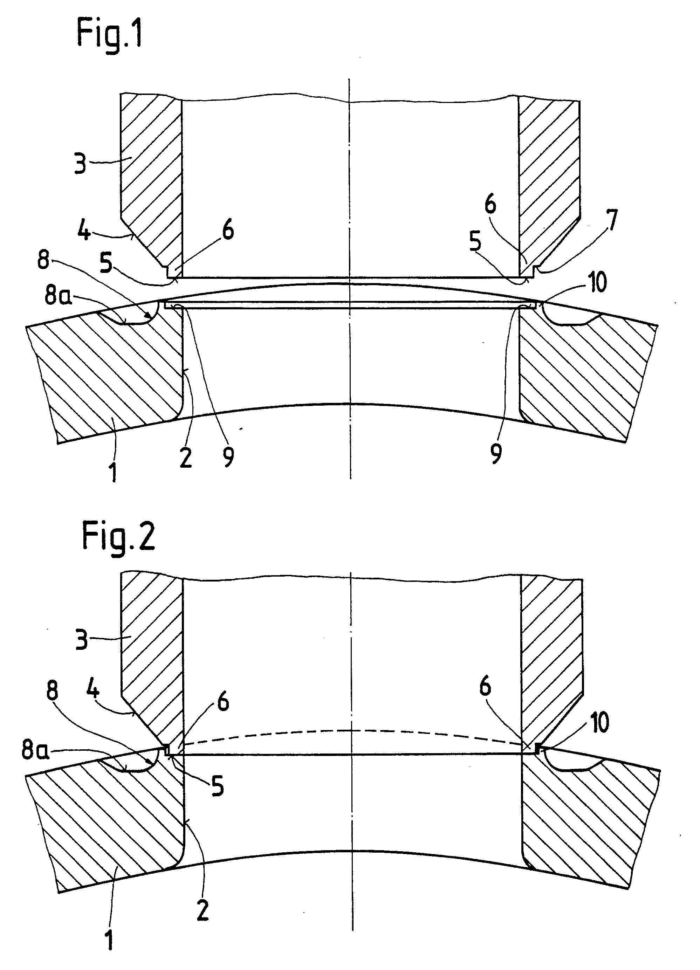

Die Figuren 1 und 2 zeigen im Schnitt einen Teil einer gekrümmten Behälterwand 1, bei der es sich beispielsweise um die Wandung eines Sammlers handelt, der mit einer Mehrzahl von radialen Bohrungen 2 versehen ist. Im Bereich jeder dieser Bohrungen 2 wird jeweils ein Rohrabzweig 3 auf die Behälterwand 1 aufgeschweißt. Die Schweißnahtvorbereitung ist am besten in den Figuren 1 und 2 zu erkennen.

Diese Darstellungen zeigen, daß der Rohrabzweig 3 am anzuschweißenden Ende ausgehend vom Außendurchmesser mit einer nach innen verlaufenden konischen Verjüngung 4 versehen ist, an deren vorderem Ende sich eine ringförmige Aufstandsfläche 5 ergibt. Diese Aufstandsfläche 5 ist am Ende einer zylindrischen Verlängerung 6 ausgebildet, die unter Bildung eines ringförmigen Einschnittes 7 einstückig am Rohrabzweig 3 ausgebildet ist.

Um den derart vorbereiteten Rohrabzweig 3 an der Behälterwand 1 in Verlängerung einer Bohrung 2 anschweißen zu können, ist die Behälterwand 1 im Bereich jeder Bohrung 2 mit einem Kragen 8 versehen, der durch eine Aussparung 8a in der Behälterwand 1 hergestellt worden ist, und zwar konzentrisch zur Bohrung 2. Innerhalb dieses Kragens 8 ist eine Gegenfläche 9 ausgebildet, die ebenso wie die Aufstandsfläche 5 des Rohrabzweiges 3 rechtwinklig zur Längsachse der Bohrung 2 bzw. des Rohrabzweiges 3 verläuft.

Wie insbesondere Fig. 2 erkennen läßt, ist die Breite der ringförmigen Aufstandsfläche 5 des Rohrabzweiges 3 kleiner als die Breite der an der Behälterwand 1 ausgebildeten Gegenfläche 9. Diese Gegenfläche 9 wird an dem der Bohrung 2 abgewandten Umfang durch einen einstückig aus dem Material der Behälterwand 1 ausgearbeiteten Ring 10 begrenzt, der eine verhältnismäßig geringe Höhe und Dicke aufweist. Die Höhe dieses Ringes 10 ist geringfügig kleiner als die axiale Länge der am Rohrabzweig 3 ausgebildeten Verlängerung 6. Seine Dicke ist derart gering, daß er mit Sicherheit vollständig aufgeschmolzen wird, wenn ein von außen angesetzter Lichtbogen des jeweiligen Schweißverfahrens auf ihn einwirkt. Bei einer bevorzugten Ausführung beträgt die Breite der ringförmigen Aufstandsfläche 5 etwa 1,3 mm, die Breite der Gegenfläche 9 etwa 1,5 mm und die Wanddicke des Ringes 10 maximal 0,5 mm.

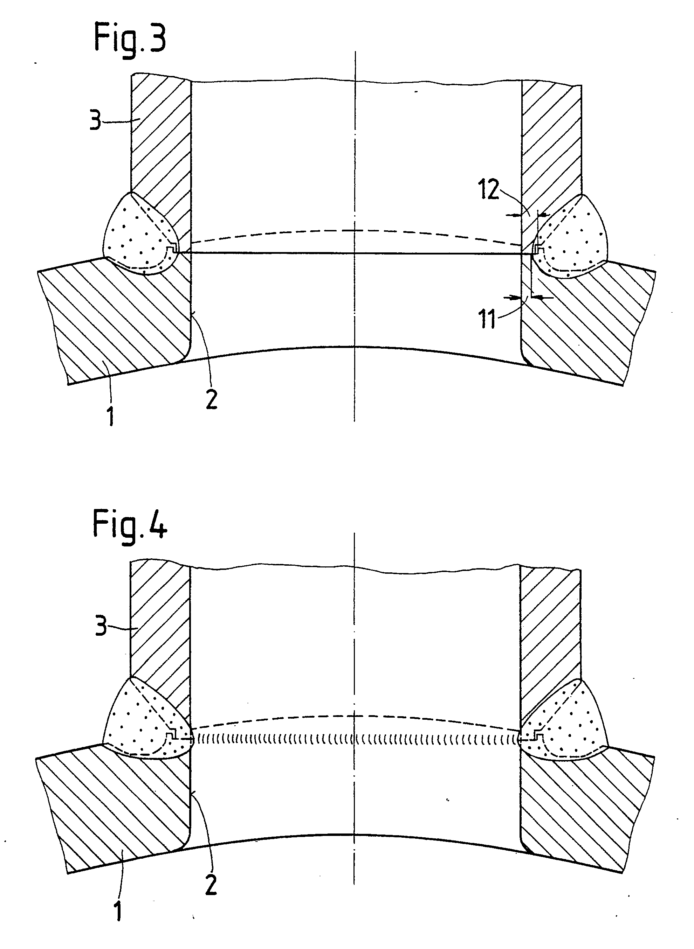

Wenn der gemäß Fig.1 vorbereitete Rohrabzweig 3 an den entsprechend vorbereiteten Kragen 8 der Behälterwand 1 gemäß Fig.2 angesetzt wird, ergibt sich durch den Ring 10 eine Zentrierung des Rohrabzweiges 3 im Verhältnis zur Bohrung 2. Wenn weiterhin die Breite der ringförmigen Aufstandsfläche 5 des Rohrabzweiges 3 kleiner als der zulässige Restspalt gewählt wird, ergibt sich nach durchgeführtem Schweißvorgang gemäß Fig.3 mit Sicherheit ein Restspalt, der unterhalb des zulässigen Wertes liegt, weil der Ring 10 in jedem Fall durch den Lichtbogen aufgeschmolzen wird, so daß der verbleibende Restspalt zwangsläufig unterhalb des zulässigen Wertes liegt. In Fig.3 ist der entstehende Restspalt 11 eingezeichnet. Er liegt wegen der Aufschmelzung des Ringes 10 mit Sicherheit unterhalb des zulässigen Restspaltes 12, der höchstens der Breite der Gegenfläche 9 entspricht.

Während die Fig.3 zeigt, daß durch die voranstehend beschriebene Nahtvorbereitung bei einem ausschließlich von außen durchgeführten Lichtbogen-Schweißverfahren durch die Aufschmelzung des Ringes 10 der entstehende Restspalt 11 stets unterhalb des zulässigen Restspaltes 12 liegt, zeigt Fig.4 einen restspaltfrei an die Behälterwand 1 angeschweißten Rohrabzweig 3. Eine derartige Durchschweißung ist beispielsweise mit Hilfe des MAG- oder WIG-Schweißverfahrens durch entsprechende Energieeinbringung möglich, weil der eine geringe Höhe und Dicke aufweisende Ring 10 einem derartigen Durchschweißen keinen nennenswerten Widerstand entgegensetzt. Die Ausgangsverhältnisse vor Beginn des Schweißverfahrens sind in den Figuren 3 und 4 gestrichelt dargestellt.

**Bezugszeichenliste:**

1 Behälterwand
2 Bohrung
3 Rohrabzweig
4 Verjüngung
5 Aufstandsfläche
6 Verlängerung
7 Einschnitt
8 Kragen
8a Aussparung
9 Gegenfläche
10 Ring

11 effektiver Restspalt
12 zulässiger Restspalt

**Ansprüche**

1. Verfahren zum Aufschweißen von Rohrabzweigen (3) mittels eines ausschließlich von außen durchgeführten Lichtbogen-Schweißverfahrens auf eine mit Bohrungen (2) versehene Behälterwand (1), wobei der Rohrabzweig (3) am anzuschweißenden Ende ausgehend vom Außendurchmesser konisch nach innen verjüngt ist und ausgehend vom zylindrischen Innendurchmesser mit einer ringförmigen Aufstandsfläche (5) versehen ist, die rechtwinklig zur Mittelachse des Rohrabzweigs (3) am Ende einer zylindrischen Verlängerung (6) ausgebildet ist, deren Innendurchmesser dem Innendurchmesser des Rohrabzweigs (3) entspricht, und mit der der Rohrabzweig (3) auf einer entsprechenden Gegenfläche (9) aufsteht, die an der Behälterwand (1) die Bohrung (2) umgebend als Ringfläche ausgebildet ist, deren Innendurchmesser dem Durchmesser der Bohrung (2) entspricht,
**dadurch gekennzeichnet,**
daß die Breite der ringförmigen Aufstandsfläche (5) des Rohrabzweiges (3) kleiner als der zulässige Restspalt (12) gewählt wird, daß die Breite der an der Behälterwand (1) ausgebildeten Gegenfläche (9) geringfügig größer ausgebildet wird als die Breite der ringförmigen Aufstandsfläche (5) und daß diese Gegenfläche (9) an dem der Bohrung (2) abgewandten Umfang durch einen einstückig aus dem Material der Behälterwand (1) ausgearbeiteten Ring (10) begrenzt wird, dessen Höhe geringfügig kleiner als die axiale Länge der am Rohrabzweig (3) ausgebildeten Verlängerung (6) ist und dessen Dicke derart gering ist, daß der Ring (10) vom von außen angesetzten Lichtbogen des jeweils angewandten Schweißverfahrens mit Sicherheit vollständig aufgeschmolzen wird.

2. Verfahren nach Anspruch 1, dadurch gekennzeichnet, daß die Breite der ringförmigen Aufstandsfläche (5) etwa 1,3 mm, die Breite der Gegenfläche (9) etwa 1,5 mm und die Wanddicke des Ringes (10) maximal 0,5 mm beträgt.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-999753 (FOSTER WHEELER LIMITED) <br> * das ganze Dokument * | 1, 2 | B23K33/00 |
| X | GB-A-1007255 (FOSTER WHEELER LIMITED) <br> * Figur 1 * | 1 | |
| A | FR-A-2466646 (KLEIN, SCHANZLIN & BECKER AG) <br> * das ganze Dokument * | 1 | |
| A, D | DE-C-3715521 (BALCKE-DÜRR AG) | | |

|  | RECHERCHIERTE SACHGEBIETE (Int. Cl.5) |
|---|---|
| | B23K |

Der vorliegende Recherchenbericht wurde für alle Patentansprüche erstellt

| Recherchenort | Abschlußdatum der Recherche | Prüfer |
|---|---|---|
| DEN HAAG | 10 SEPTEMBER 1990 | ARAN D.D. |